# EUROPEAN PATENT APPLICATION

(11) **EP 1 117 270 A2**
(43) Date of publication of application: **18.07.2001**
(21) Application number: 00311072.3
(22) Date of filing: 12.12.2000
(51) Int. Cl.: H04Q 7/38

(54) **Dynamic routing of wireless communications**

(30) Priority: 12.01.2000 US 482476
(71) Applicant: LUCENT TECHNOLOGIES INC., Murray Hill, New Jersey 07974-0636 (US)
(72) Inventor: Aravamudan, Murali, Murray Hill, New Jersey 07974 (US); Naqvi, Shamim A., Morristown, New Jersey 07960 (US)
(74) Representative: Watts, Christopher Malcolm Kelway, Dr.

(57) **Abstract**

A method and apparatus for dynamic routing of wireless communications. More particularly, wireless communications are dynamically routed by marking, by a softswitch, every endpoint participating in a call and as the entry for a marked endpoint is updated a message is generated and sent to the softswitch. Upon receiving such a message, the softswitch re-computes the necessary new resources for maintaining the call and (i) instructs such new resources to negotiate media transfer, (ii) after receiving an acknowledgement from the new resources, transmits appropriate call initiation messages to such resources; and (iii) transmits call release messages to the prior, i.e., old, resources supporting the call. Advantageously, selection of the requisite resources to participate in a particular is driven by the knowledge of the communications network topology. As such, resources are selected which are topologically closer to the endpoint thereby increasing the efficiency of the network resources on a network-wide basis.

## Description

### Field of the Invention

The present invention relates to wireless communications systems, and more particularly, to dynamically routing calls in wireless communications networks.

### Background of the Invention

A well-known feature of conventional telecommunications systems which provide telephone service, e.g., public switched telephone network (PSTN), central offices (CO), private branch exchange (PBX), and Internet telephony servers, is that such systems are discrete islands of functionality, and each such island has its own particular syntax and semantics. The use of the different syntaxes, semantics, and protocols, makes it difficult to easily interconnect the various islands, and it is virtually impossible to provide features that work together seamlessly across the various islands.

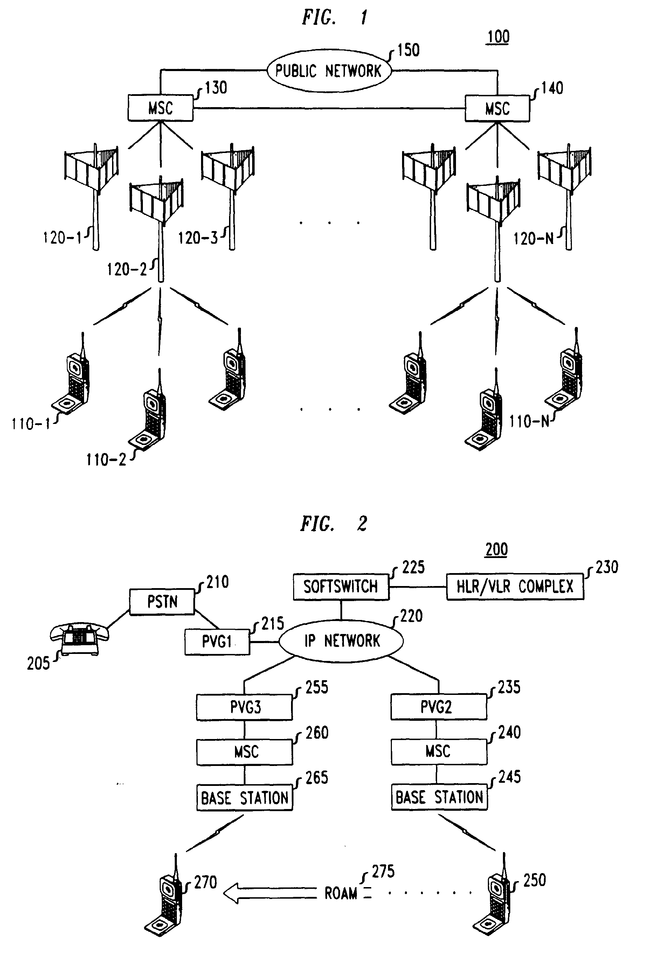

Further, the increasing growth of wireless communications in terms of both voice and data communications only adds to the above-described network complexity. For example, FIG. 1 shows a conventional wireless communications system architecture 100 as is popular with current day wireless communications service providers. More particularly, wireless communications system architecture 100 includes wireless terminals 110-1 through 110-N, wireless base stations 120-1 through 120-N, mobile switching center (MSC) 130, MSC 140, and public network 150 (e.g., the well-known PSTN).

As will be readily understood, a user employing a wireless terminal, e.g., wireless terminal 110-1, initiates a call, to a wireless or wireline endpoint, and is connected with a base station, e.g., base station 120-2, which, in turn, routes the call through MSC 130 and public network 150 to the intended endpoint. As such, the PSTN, e.g., public network 150, as it currently exists allows a wireless endpoint, e.g., wireless terminal 110-1, participating in a call with a wireline endpoint to sever its connection with a particular base station, e.g., base station 120-2, and be connected to another base station, e.g., base station 120-1, as the wireless endpoint moves, i.e., roams, within the network. As the base stations are each connected to a MSC and the MSC is connected to a circuit switch in the PSTN, this allows the roaming wireless endpoint to effectively roam within the MSC's immediate network.

However, the connection between the PSTN and the particular MSC remains fixed for the duration of the call such that call cannot be dynamically (as used herein the terms "dynamic" or "dynamically" mean real-time) routed to a different PSTN circuit switch as the wireless endpoint is roaming in the network. Thus, this leads to problems such as call being "dropped". That is, as the wireless endpoint roams in the network it is connected to various base stations at various times. A certain number of such base stations maintain a connection with a particular MSC. During roaming, a wireless endpoint may find itself connected with a base station which is not associated with the original MSC. Thus, the wireless endpoint is no longer associated with the original MSC and, hence, losses its connection to the PSTN.

Complicating matters further is that evolution of next generation networks is centered on the convergence of voice and data networks. That is, it appears highly likely that next generation communications network will be an evolution of today's PSTN and Internet Protocol (IP) networks. Today's communications service providers are being driven by a number of factors in the development of such next generation networks such as: (1) the well-known Internet is becoming a major network choice for distribution of voice and data; (2) IP usage is increasing at a dramatic rate thereby causing bandwidth problems on existing PSTN networks carrying significant data traffic; (3) convergence of PSTN and packet networks (e.g., IP networks) is required to allow for end-to-end delivery of communications services; (4) the creation of new services connected with the increasing use of packet networks; and (5) increasing deregulation in the marketplace is creating new and competitive telecommunications environments for established, new, and specialized service providers in both voice and data traffic.

One major underlying feature in delivering such next generation communications networks is network interoperability. That is, the service providers ability to offer valued added communications services across circuit and packet networks is tied directly to the ability of providing interoperability across a number of heterogeneous networks that support a wide range of signaling protocols (e.g., SS7, IP, Media Gateway Control Protocol (MGCP), H.323, Session Initiation Protocol (SIP) and the like). An emerging switching platform useful in resolving such network interoperability issues is so-called "software switching". Software switches (also known in the art as "softswitches") are a multi-protocol software solution for signaling and transport thereby providing interoperability across heterogeneous networks, e.g., circuit and packet networks. One present commercially available softswitch is the Lucent Technologies Softswitch, available from Lucent Technologies Inc., 600 Mountain Ave., Murray Hill, NJ 07974. In conjunction with the LT Softswitch, PSTN and Internet Telephony Service Providers can provide seamless interoperability between PSTN and IP network domains.

In these future communications networks, circuit switches that carry telecommunications traffic will be replaced by so-called Packet Voice Gateways (PVG) utilizing packet technology for enabling telecommunications. Essentially, a PVG is a device for converting TDM traffic to IP packets and vice versa. Packet Voice Gateways fall into two main categories: (1) Trunking Gateways (TG); and (2) Access Gateways (AG). As will be appreciated, the main differences between TG's and AG's is the traffic capacity of each and their respective signaling support. Typically, a TG does not terminate PSTN signaling whereas an AG typically provides integrated services digital network primary rate (ISDN PRI) and other Channel Associated Signaling (CAS) support. In softswitch-controlled networks, both the TG and the AG are controlled via well-known control protocols. In these networks, call setup will be controlled by the softswitch which will instruct PVG's in the network of incoming calls, and the routing of these calls to other PVGs and endpoints. Thus, the softswitch primarily handles the control, i.e., signaling, of data and not voice, i.e., media, traffic which is handled by the PVG. The softswitch instructs the PVG's on how to negotiate with each other and in the efficient handling of the media traffic.

An aspect of the invention herein is directed to effectively making routing decisions in such networks and, in particular, to facilitating the dynamic routing of wireless communications in such networks.

### Summary of the Invention

An aspect of the present invention is directed to a method and apparatus for dynamic, i.e., in real-time, routing of wireless communications. More particularly, in accordance with an aspect of the invention, wireless communications are dynamically routed by marking, by a softswitch, every endpoint participating in a call and as the entry for a marked endpoint is updated a trigger, e.g., a message, is generated and sent to the softswitch. The generation of such messages will occur under a variety of circumstances, e.g., as a wireless terminal roams to different positions in a network. Upon receiving such a message, the softswitch re-computes an updated set of the necessary network resources for maintaining the call and (i) instructs such updated network resources to negotiate media transfer, that is, a re-negotiation occurs with respect to the handling of the media traffic, i.e., voice traffic, in the that the softswitch determines that a new set of PVG's should handle the media, and instructs such PVG's to re-negotiate the media traffic; (ii) after receiving an acknowledgement from the updated set of resources, the softswitch transmits appropriate call initiation messages to such resources; and (iii) transmits call release messages to the prior, i.e., old, resources supporting the call.

In accordance with the preferred embodiment of the invention, a call setup request originates from a network, e.g., the well-known SS7 signaling network of the PSTN, and arrives in a packet-switched network that is controlled by a softswitch. In accordance with this preferred embodiment, the softswitch selects a pair of packet voice gateways (PVG1 and PVG2, respectively) to enable media transfer through the packet-switched network and instructs the originating network to direct the media, e.g., the call, to PVG1. Additionally, the softswitch instructs PVG1 and PVG2 to negotiate media transfer between one another, e.g., in a IP network this negotiation will involve well-known RTP/UDP/IP address and port negotiation. Further, PVG2 is instructed to terminate the call on some other network element, e.g., a PSTN circuit switch, a MSC or an endpoint. After the aforementioned PVG negotiation is complete, media transfer is initiated from the originating switch to PVG1, and from PVG1 to PVG2. In accordance with this preferred embodiment, PVG2 is connected to a MSC based on the endpoint's location as defined by a database entry in a well-known Home Location Register (HLR) and/or Visitor Location Register (VLR) (hereafter referred to in combination as a "HLR/VLR complex"). As will be appreciated, HLR's and VLR's play an integral role with MSC's to route a wireless call throughout a wireless network as the endpoints roam in the network.

As the endpoints roam, in accordance with the preferred embodiment, the corresponding HLR/VLR complex entry is updated. As such updates occur, messages are sent by the HLR/VLR complex to the softswitch which recomputes the necessary new, i.e., updated, resources (e.g., one or more PVG's) for maintaining the call and (i) instructs such new resources to negotiate media transfer, (ii) after receiving an acknowledgement from the new resources, transmits appropriate call initiation messages to such resources; and (iii) transmits call release messages to the prior, i.e., old, resources supporting the call.

Advantageously, in accordance with an aspect of the invention, selection of the requisite resources to participate in a particular call is driven by the knowledge of the communications network topology. As such, resources are selected which are topologically closer to the endpoint thereby increasing the efficiency of the network resources on a network-wide basis.

### Brief Description of the Drawings

FIG. 1 shows a conventional wireless communications system architecture;
FIG. 2 shows an exemplary architecture for routing wireless communications in accordance with an embodiment of the invention; and
FIG. 3 is a flowchart of illustrative operations for routing wireless communications in accordance with the principles of the invention.

Throughout this disclosure, unless otherwise noted, like elements, blocks, components or sections in the figures are denoted by the same reference designations.

### Detailed Description

An aspect of the present invention is directed to a method and apparatus for dynamic routing of wireless communications. More particularly, in accordance with an aspect of the invention, wireless communications are dynamically routed by marking, by a softswitch, every endpoint participating in a call and as the entry for a marked endpoint is updated a message is generated and sent to the softswitch. Upon receiving such a message, the softswitch re-computes the necessary new resources for maintaining the call and generates the requisite instructions to such new resources to negotiate and implement media transfer. Advantageously, in accordance with an aspect of the invention, selection of the requisite resources to participate in a particular call is driven by the knowledge of the communications network topology. As such, resources are selected which are topologically closer to the endpoint thereby increasing the efficiency of the network resources on a network-wide basis.

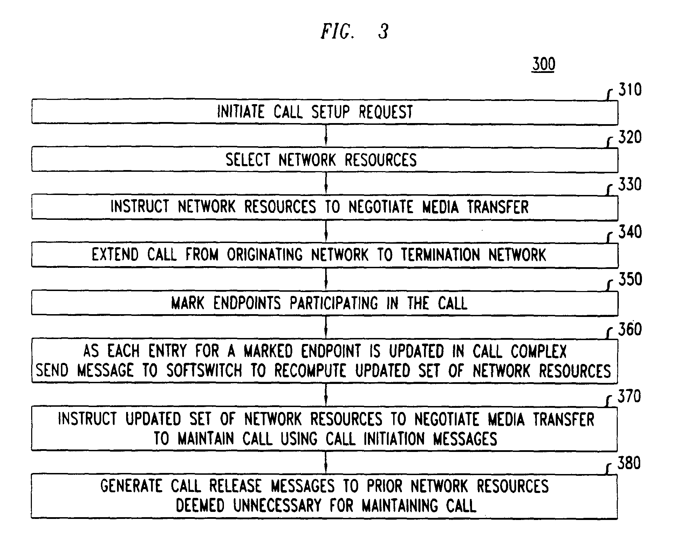

More particularly, turning our attention to FIG. 2 and FIG. 3, FIG. 2 shows an exemplary architecture 200 for routing wireless communications in accordance with a preferred embodiment of the invention, and FIG. 3 is a flowchart of illustrative operations 300 for routing wireless communications in accordance with the principles of the invention. In particular, in accordance with exemplary architecture 200 and the preferred embodiment, a call is initiated by a calling party from POTS telephone 205 to a called party at wireless terminal 250. As such, a call setup request is initiated (FIG. 3, block 310) and extended through PSTN 210 to a packet-switched network, e.g., IP network 220. IP network 220 is controlled by softswitch 225 which, in accordance with the preferred embodiment, is the aforementioned Lucent Technologies Softswitch, available from Lucent Technologies Inc. (hereinafter alternatively referred to as the "LT Softswitch") A more detailed description of the LT softswitch architecture and its operation is contained in EP-A-0963096 and in EP application no. 00 306 724.6

Softswitch 225 selects the necessary network resources (see, FIG. 3, block 320). For example, *inter alia.,* a pair of packet voice gateways, in particular, PVG1 215 and PVG2 235 are selected to enable media transfer through IP network 220. Further, softswitch 225 instructs PSTN 210 to direct the media, e.g., the voice traffic, to PVG1 215, and instructs the network resources, e.g., PVG1 215 and PVG2 235, respectively, (see, FIG. 3, block 330) to negotiate media transfer between themselves. For example, in IP networks this negotiation will typically involve well-known RTP/UDP/IP address and port negotiation. Softswitch 225 further instructs PVG2 235 to extend the call to some further network element. In accordance with the instant embodiment, PVG2 235 extends the call to MSC 240 which thereafter, in a conventional manner, completes the wireless call extension through base station 245 to wireless terminal 250. As such, the call is extended from the originating network to the terminating network (see, FIG. 3, block 340).

In accordance with the embodiment of FIG. 2, PVG2 235 is connected to MSC 240 as a function of the location of wireless terminal 250, i.e., an endpoint, as indicated by its conventional entry in HLR/VLR complex 230. That is, as will be appreciated, HLR/VLR complex 230 contains at least one database storing subscription information with respect to a set of wireless terminals for facilitating communications in a wireless communications network. For example, HLR/VLR complex 230 may contain information about terminals that are currently in a specific wireless service area, or a particular terminal's current location and status. Therefore, the information in HLR/VLR complex 230 changes frequently as subscribers, i.e. endpoints, change location and plays an integral part as roaming occurs in the wireless network.

As mentioned previously, an aspect of the invention herein is directed to effectively making routing decisions in networks and, in particular, to facilitating the dynamic routing of wireless communications in such networks. That is, an aspect of the present invention is directed to a method and apparatus for dynamic, i.e., in real-time, routing of wireless communications. More particularly, in accordance with an aspect of the invention, wireless communications are dynamically routed by marking, by a softswitch, every endpoint participating in a call and as the entry for a marked endpoint is updated a message is generated and sent to the softswitch. Upon receiving such a message, the softswitch re-computes the necessary new resources for maintaining the call and generates the requisite instructions to such new resources to negotiate and implement media transfer.

Thus, in accordance with the preferred embodiment, all endpoints participating in a call are marked at the softswitch (see, FIG. 3, block 350). For example, in the illustrative embodiment of FIG. 2, a mark is made at softswitch 225 with respect to POTS telephone 205 and wireless terminal 250. Illustratively, a mark is an entry in a database identifying and describing a particular endpoint. As will be appreciated, the database may be internal to the softswitch or located externally from the softswitch. Now, suppose that the called party using wireless terminal 250 begins to roam. As explained above, such roaming will effect a change in the entry stored in HLR/VLR complex 230. Thus, in accordance with an aspect of the invention, as the entry for a marked endpoint is updated in HLR/VLR complex 230 a message is generated by HLR/VLR complex 230 and transmitted to softswitch 225 (see, FIG. 3, block 360). Upon receiving such a message, softswitch 225 recomputes (see, FIG. 3, block 360) the network resources necessary to maintain or re-establish the particular call. After such recomputation of the requisite network resources is completed, softswitch 225 instructs the updated network resources to negotiate media transfer to maintain/re-establish the call (see, FIG. 3, block 370). Illustratively, as such instructions to the updated network resources are received, acknowledgement is received by the softswitch from the updated network resources and the softswitch transmits appropriate call initiation messages (see, FIG. 3, block 370) to the updated resource set. In addition, softswitch 225 will generate call release messages to the old, i.e., no longer required to maintain the call, network resources (see, FIG. 3, block 380).

As such, resources are selected which are topologically closer to the endpoint thereby increasing the efficiency of the network resources on a network-wide basis. For example, in the illustrative embodiment of FIG. 2, as wireless terminal 250 roams in the network (see, e.g., roaming path 275), softswitch 225, in accordance with an aspect of the invention, is enabled to select those resources which are topologically closer to the endpoint for continuing to maintain the call. Thus, the call originally carried via PVG2 235, MSC 240 and base station 245, is dynamically routed to PVG3 255, MSC 260 and base station 265. Thus, the call is rerouted and extended to wireless terminal 270 without the connection between the PSTN and the particular MSC remaining fixed for the duration of the call such that call can be dynamically routed to a different PSTN circuit switch as the wireless endpoint is roaming in the network. Advantageously, in accordance with an aspect of the invention, selection of the requisite resources to participate in a particular call is driven by the knowledge of the communications network topology thereby increasing overall network efficiency and utilization.

Of course, while the illustrative embodiment discussed herein includes a single softswitch, it will be understood that the principles of the invention apply to further embodiments involving multiple softswitches thereby providing scalability. For example, in larger size networks it will be necessary to deploy multiple softswitches in order to efficiently process the larger call volume. Such scalability is achieved by employing multiple softswitches which communicate with each other via softswitch-to-softswitch control protocols. Thus, the larger amount of call traffic in the network is distributed across several softswitches. In accordance with such further embodiments of the invention, multiple softswitches may share the same HLR/VLR complex. Thus, messages triggered from the HLR/VLR complex may be routed to a particular softswitch and thereafter routed to other softswitches. Thus, for example, in accordance with such further embodiments of the invention, a wireless endpoint may roam in several networks (operated by different service providers) controlled by multiple softswitches thereby allowing the wireless endpoint to maintain a call across different service provider networks.

As detailed above, the present invention can be embodied in the form of methods and apparatuses for practicing those methods. The invention can also be embodied in the form of program code embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. The invention can also be embodied in the form of program code, for example, in a storage medium, loaded into and/or executed by a machine, or transmitted over some transmission medium, such as over electrical wiring or cabling, through fiber optics, or via electromagnetic radiation, wherein, when the program code is loaded into and executed by a machine, such as a computer, the machine becomes an apparatus for practicing the invention. When implemented on a general-purpose processor, the program code segments combine with the processor to provide a unique device that operates analogously to specific logic circuits.

Furthermore, all examples and conditional language recited herein are principally intended expressly to be only for pedagogical purposes to aid the reader in understanding the principles of the invention and the concepts contributed by the Applicants to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams herein represent conceptual views of illustrative circuitry embodying the principles of the invention. Similarly, it will be appreciated that any flowcharts, flow diagrams, state transition diagrams, pseudocode, program code, and the like represent various processes which may be substantially represented in computer readable medium and so executed by a computer, machine, or processor, whether or not such computer, machine, or processor, is explicitly shown.

## Claims

1. A method for routing a call between a first endpoint and a second endpoint in a communications network, the call being extended between the first endpoint and the second endpoint utilizing a first set of network resources, the method comprising:
marking respective entries in a database related to the first endpoint and the second endpoint, respectively;
updating the entries in the database as a function of a location of the second endpoint; and
determining, in response to the updating the entries, a second set of network resources for maintaining the call extended between the first endpoint and the second endpoint.

2. The method of claim 1 further comprising:
generating a set of call initiation messages;
transmitting the set of call initiation messages to the second set of network resources; and
routing the call using the second set of network resources.

3. The method of claim 2 further comprising:
generating a set of call release messages; and
transmitting the set of call release messages to the first set of network resources.

4. The method of claim 1 wherein the database is accessible by a softswitch.

5. The method of claim 4 wherein the determining the second set of network resources is performed by the softswitch.

6. The method of claim 5 wherein the updating the entries is performed in response to a message from a HLR/VLR complex, the message identifying the location of the second endpoint.

7. The method of claim 5 wherein the first endpoint includes a POTS telephone and the second endpoint includes a wireless terminal.

8. The method of claim 3 wherein the second set of network resources includes at least a pair of packet voice gateways (PVG).

9. The method of claim 8 wherein the pair of PVG's are used to route the call between a PSTN network and a IP network.

10. A method for maintaining a call extended between a plurality of endpoints in a communications network, the method comprising:
marking respective entries in a communications database related to particular ones of the endpoints utilized to extend the call;
updating the entries in the communications database as a function of a location of at least one endpoint; and
determining, in response to the updating the entries, a set of network resources for maintaining the call extended between the plurality of endpoints.

11. The method of claim 10 further comprising:
routing the call through the set of network resources.

12. The method of claim 11 further comprising:
receiving a message from a HLR/VLR database that identifies that the location of the at least one endpoint has changed.

13. The method of claim 12 wherein the communications network includes at least one PSTN and at least one IP network.

14. The method of claim 13 wherein the second endpoint is a wireless terminal.

15. The method of claim 13 wherein the location of the at least one endpoint is a function of a roaming of the wireless terminal within a geographic region.

16. A communications system for extending a call through a plurality of endpoints comprising:
a communications complex for tracking a location of particular ones of the endpoints; and
at least one softswitch for receiving at least one message from the communications complex, the at least one message being generated as a function of a change in the location of at least one endpoint, and for determining a set of network resources for the extending the call.

17. The communications system of claim 16 wherein the communications complex includes a HLR database.

18. The communications system of claim 17 wherein the communications complex includes a VLR database.

19. The communications system of claim 18 wherein the softswitch receives the message from the HLR database and determines the set of network resources as a function of the message.

20. The communications system of claim 17 wherein the communications system includes at least one PSTN and at least one IP network.

21. The communications system of claim 20 wherein the second endpoint is a wireless terminal.

22. The communications system of claim 21 wherein the wireless terminal is roaming in a geographic region serviced by the communications system.

23. The communications system of claim 22 wherein the change in the location of the at least one endpoint is a function of the roaming of the wireless terminal within the geographic region.

24. The communications system of claim 20 wherein the softswitch controls the IP network.

25. The communications system of claim 19 wherein the set of network resources includes at least one packet voice gateway.

26. A machine-readable medium having stored thereon a plurality of instructions, the plurality of instructions including instructions that, when executed by a machine, cause the machine to perform a method as claimed in any of claims 1 to 15.
